# EUROPEAN PATENT APPLICATION

(11) **EP 4 342 870 A1**
(43) Date of publication of application: **27.03.2024**
(21) Application number: 23195581.6
(22) Date of filing: 06.09.2023
(51) Int. Cl.: C04B 35/486, A44C 17/00, C04B 35/488, C04B 35/64

(54) **METHOD FOR THE REALIZATION OF A MANUFACTURED PRODUCT FOR JEWELLERY, WATCHMAKING, GOLDSMITHING OR COSTUME JEWELLERY BASED ON ZIRCONIUM OXIDE AND MANUFACTURED PRODUCT THUS OBTAINED**

(30) Priority: 20.09.2022 IT 202200019275
(71) Applicant: Patros S.r.l., 36066 Sandrigo (Vicenza) (IT)
(72) Inventor: BOTTENE, Leonardo, 36010 Monticello Conte Otto (Vicenza) (IT); BOTTENE, Diego, 36010 Monticello Conte Otto (Vicenza) (IT)
(74) Representative: Feltrinelli, Secondo Andrea

(57) **Abstract**

Method for the realization of a manufactured product for jewellery, watchmaking, goldsmithing or costume jewellery, wherein the manufactured product is a bracelet or a ring or a necklace or a pendant or an earring or a brooch or any other jewel or object usable in jewellery, watchmaking, goldsmithery or costume jewellery, comprising the steps of supplying a powder of zirconia and a powder of alumina and a powder of a third component, mixing the powders obtaining a mixture of powders, placing and pressing the mixture of powders into a mold, obtaining a preformed product, carrying out a first sintering step of the preformed product, obtaining a pre-sintered product, carrying out a second sintering obtaining said manufactured product, wherein both between the step of carrying out a first sintering and of carrying out a second sintering and after the step of carrying out a second sintering, a step of polishing takes place, obtaining a polished product; product obtainable with the aforementioned method.

## Description

### TECHNICAL FIELD OF THE INVENTION

The present invention refers to a method for obtaining a manufactured product for jewellery, watchmaking, goldsmithing or costume jewellery and the related manufactured product thus obtained.

### STATE OF THE PRIOR ART

In the market of jewellery or costume jewellery products made of materials other than the classic precious metals, such as gold, platinum and silver, are known.

In particular, some of these products may still feature metallic materials, other may comprise plastic or other nature materials, and still others a composition of several materials.

Even more specifically, jewels or manufactured products made based on zirconium oxide are known in the market.

Zirconia, or zirconium oxide, was originally used to build prostheses to be implanted in the human body. Subsequently it also found application in the dental sector. In its initial or original form, zirconia is found in the form of powder and has a transparent appearance with a milky effect. For this reason, in the dental field enamels are often used to apply as a coating to zirconia implants, in order to achieve a desired colour similar to that of the teeth.

The Italian application IT201900016379, in the name of the same applicant, describes a method for the creation of an object for jewellery, goldsmithery or costume jewellery which presents bands of different colours and which is made with a material possibly including zirconia and alumina. The method for its production includes a compression step of the material that constitutes the object, followed by a pre-sintering step at a temperature of 1000-1050°C and a subsequent sintering step at 1600°C. The object resulting from the sintering step is automatically or directly shiny.

Application WO2013/105064, in the name of the same applicant, describes a method for the production of an object for jewellery, goldsmithing or costume jewellery made of hard zirconium oxide and aluminium oxide. This method includes the steps of compression of the material that constitutes the object, pre-sintering of the compressed material and sintering of the pre-sintered material.

It is therefore necessary to provide an alternative method, which is easy and practical for the production of such manufactured products for jewellery, watchmaking, goldsmithing or costume jewellery, and which is able to give them improved properties both in terms of colouring and in terms of mechanical characteristics, elasticity and resistance.

### OBJECTS OF THE INVENTION

The aim of the present invention is to provide a method for producing a manufactured product for jewellery, watchmaking, goldsmithing or costume jewellery which is easy and practical to produce.

Another object of the present invention is to provide a method for the production of a manufactured product for jewellery, watchmaking, goldsmithery or costume jewellery which is capable of giving the resulting product certain characteristics in terms of appearance and/or colour.

A still further object of the present invention is to provide a method for the production of a manufactured product for jewellery, watchmaking, goldsmithing or costume jewellery which is capable of giving the resulting product improved mechanical characteristics, for example in relation to the hardness and resistance of the product itself.

Furthermore, an object of the present invention is to provide a method for the production of a manufactured product for jewellery, watchmaking, goldsmithing or costume jewellery which is capable of giving the resulting product total non-toxicity.

In accordance with an aspect of the present invention, a method is provided for the production of a manufactured product for jewellery, watchmaking, goldsmithing or costume jewellery according to claim 1.

In accordance with another aspect of the present invention, a manufactured product for jewellery, watchmaking, goldsmithing or costume jewellery is provided according to claim 13.

The dependent claims refer to preferred and advantageous forms of the invention.

### EMBODIMENTS OF THE INVENTION

Further characteristics and advantages of the present invention will be more evident from the detailed description of a preferred, but not exclusive, embodiment of a method for the production of a manufactured product for jewellery, watchmaking, goldsmithing or costume jewellery according to the invention.

The manufactured product according to the invention has the shape of a bracelet, a ring, a necklace, a pendant, an earring, a brooch or any other jewel or object that can be used for jewellery and/or watchmaking and/or goldsmith and/or costume jewellery.

These manufactured products can be obtained in a single piece, or they can be obtained by assembling several pieces together.

The method according to the present invention first comprises a step of providing or preparing a zirconia (or zirconium oxide) powder and of providing or preparing an alumina (or aluminium oxide) powder. There is also a step of providing a powder of a third component such as at least an oxide of a metallic material, such as for example yttrium, hafnium and/or iron.

Then it follows a step of mixing the zirconia powder with the alumina powder and the powder of the third component obtaining a mixture of powders.

Once these powders are mixed, a step of positioning and pressing this powder mixture into a pre-established mold is performed. This mold can be made of steel with the use of a press, for example isostatic, in order to compact the powder mixture and obtain a preformed product. The preformed product can have a circular, polygonal, regular, irregular, etc. shape in plan. This shape depends on the shape and dimensions of the mold itself and of the final product to be obtained.

This preformed product, considering its plan shape, can have a diameter or size of approximately 100 mm. In any case, you can also obtain other sizes or other diameters depending on your needs.

The preformed product also has a certain thickness, for example between 3 mm and 200 mm or up to 300 mm and more.

After obtaining this preformed product, it is placed in a special oven in which a first sintering or pre-sintering step takes place by heating the product to a temperature of approximately 800°C or between 750°C and 850°C. A pre-sintered product is therefore obtained. In this way, the material of the pre-sintered product is more compact than the preformed product, thus being able to more easily continue in the following processing steps, such as those of processing on numerically controlled machines.

The pre-sintered product at 750-850°C has intrinsic differences compared to a product pre-sintered at higher temperatures, such as 1000°C or higher, as it maintains much better dimensional stability. In fact, products pre-sintered at higher temperatures deform significantly in terms of measurement.

The subsequent processes which the pre-sintered product may undergo can be one or more of turning, milling, lasering. The choice of subsequent processes varies based on the effect to be obtain and also on the final shape of the manufactured product to be realized, also on the basis of the design it must present.

The pre-sintered product, after these subsequent processes, in fact, substantially presents the final shape of the finished manufactured product.

The method according to the present invention then advantageously includes a step of polishing the pre-sintered product. Polishing is carried out with a diamond and oil paste, for example with at least one shaped felt and preferably manually. Polishers and/or cleaners specific to the goldsmith sector can be used.

Alternatively or additionally, the polishing step can be mechanical or robotic.

For example, aluminium microspheres or various types of ceramic elements built for the various models produced can be used.

This step allows to obtain at least a surface already polished, and therefore at least substantially free of irregularities and/or opaque areas, capable of better accepting subsequent treatments. A polished product is therefore obtained which is washed with a detergent solution, for example based on ammonia-free soap. This step preferably takes place at a temperature of 200°C. The product is then rinsed in water, for example distilled. A wet product is therefore obtained, which is dried, for example by means of a special lamp or an infrared oven and/or in an electric oven with air, for example compressed air. A dried product is obtained.

It then proceeds with a step of sintering the dried product. Overall, this is a step of carrying out a second sintering and is also the final step of heating the product according to at least one version of the present invention.

Alternatively, the pre-sintering and/or sintering steps can be repeated, depending on needs.

Before carrying out the second and final sintering step, the product in general or the dried product can be pigmented. This step occurs by adding at least one pigment or colour, for example in the form of a liquid or solution, of the desired colour. According to at least one version of the present invention, this pigmenting step occurs by immersing the product in general or the dried product in the liquid or in the solution of the at least one pigment or colour, for a time varying from a few seconds to a few minutes, for example for 10 seconds.

A carefully drying step then follows which may coincide with or be further than the drying step indicated above.

The sintering step takes place at a temperature varying between 1250°C and 1800°C for a period ranging from 10 to 24 hours. This step takes place in an oven suitable for very high temperatures. The final manufactured product is then obtained.

This sintered product has a buttery-ivory white colour. This is both thanks to the method according to the present invention and thanks to the mixture of powders present in the product itself.

In particular, according to at least one version of the present invention, the mixture of powders includes zirconia for 55-85% or for 60-70%, alumina for 15-40% or for 15-25% or for 30- 40% and the third component for a remaining percentage between 0.1% and 15% (also depending on whether only one metal oxide or more than one of those indicated is present). These and the further percentages present in this disclosure are percentages by weight of the total weight of the mixture and/or the object.

According to one version of the present invention, there is approximately 60% zirconia and 20-30% or approximately 40% alumina.

According to a further version of the invention, the third component comprises only one of the indicated oxides, or two or three of the indicated oxides.

Yttrium oxide can be present in a percentage less than 10% or less than 8% or less than approximately 6%, hafnium oxide can be present in a percentage less than 10% or less than 8% or less than approximately 5%, iron oxide may be present in a percentage less than 5% or less than 3% or less than 1% or less than 0.5% or between 0.6% and 1% or between 0.6% and 3% or between 0.6% and 5% or between 1% and 5%.

According to one version of the present invention, the third component comprises yttrium oxide, hafnium oxide and iron oxide.

The possible percentages can be: 6% or less of yttrium oxide, 5% or less of hafnium oxide, 0.5% or less of iron oxide or iron oxide according to a different percentage, in accordance with what is indicated above.

In this case, according to a version of the present invention, the zirconium oxide is present in a percentage between 55% and 85%, and/or the aluminium oxide between 15% and 25%. The remaining percentages, depending on the specific composition and percentage of the third component, can be calculated considering the total of 100% of the entire mixture or the entire product (without naturally considering any additions of stones or pearls or enamels or other materials after the creation of the manufactured object).

The presence of the third component allows the colouring of the resulting product to be modulated as these are metal oxides having a substantially silvery gray colour and therefore can act as modulators of the shade of the resulting product.

Furthermore, they give mechanical properties to the resulting product, which is more elastic, less glassy and/or more resistant to breakage than the same material composed of zirconia and alumina but without the third component.

After the sintering step, following the cooling of the sintered product material, a second polishing step of the cooled product is carried out.

The step of cooling the sintered product takes place at a temperature of approximately 200°C or between 80°C and 200°C, and/or bringing the product to this temperature. The cooling, polishing and washing steps can last 24 to 48 hours, after sintering.

This second polishing step preferably takes place manually, and/or for example by applying a diamond paste, and/or using brushes and shaped felt discs, etc.. Alternatively or additionally, the polishing step can be mechanical or robotic. The methods can be the same as indicated above. A polished manufactured product is thus obtained.

A further step of washing the product then takes place (deriving from the previous step, i.e. the polished manufactured product), for example by means of an aqueous detergent solution, a detergent, for example an ammonia-free soap, by ultrasound, etc. This detergent may be the same or different than the cleaning solution indicated above. This further washing step takes place at a temperature of 100°C or between 80°C and 120°C. Then follows a further step of drying in an oven, for example a ventilated electric oven, and/or for example bringing the product to a temperature of up to 200°C or approximately 200°C.

These steps of second polishing and subsequent washing are very important because it has been seen that, in this way, the resulting product has a polishing and cleanliness that cannot be achieved otherwise. For example, the manufactured product resulting from the second polishing and subsequent washing step may have a mirror-like and/or diamond-like shine. It has thus been seen that the resulting product becomes particularly appreciated on the market, even more than products with a similar composition but obtained with alternative methods.

Furthermore, maintaining a temperature higher than the ambient temperature, indeed by a few hundred degrees, at least for the steps following sintering, allows a stabilization of the product, which is even more compact and with improved properties, compared to those products which undergo a more abrupt cooling after sintering. In fact, a sudden cooling of the product after sintering can produce, at least on its external surface, the creation of micro-cracks which are completely absent in the product according to the present invention. Furthermore, sudden cooling can also cause the piece to break.

A final manufactured product is thus obtained comprising a polished and washed external surface, for example shiny and compact, mirror-like and/or diamond-like, and/or free of micro-cracks.

After allowing the product to cool, at least one step of application of the desired materials can follow, such as for example precious metals such as gold, platinum, palladium, silver, or other materials such as titanium, carbon, metals in general, diamonds, natural and/or or synthetic gems. The finished manufactured product is then obtained.

This application step can take place via welding or brazing on site or via gluing and/or mechanical interlocking, etc.

The product manufactured according to the present invention has a high mechanical resistance and, in particular, a high resistance to impacts and/or scratches. Furthermore, as mentioned, thanks to the presence of the third component (in addition to zirconia and alumina), the resulting product is more elastic, less glassy and therefore more resistant to breakage. In fact, therefore, the duration of the product is almost unlimited.

The invention and the method thus conceived are susceptible to numerous modifications and variations, all falling within the scope of the inventive concept described in the present discussion.

## Claims

1. Method for the realization of a manufactured product for jewellery, watchmaking, goldsmithing or costume jewellery, wherein said manufactured product is a bracelet or a ring or a necklace or a pendant or an earring or a brooch or any other jewel or object usable in jewellery, watchmaking, goldsmithery or costume jewellery, comprising the following steps:
supplying a powder of zirconia or zirconium oxide and a powder of alumina or aluminium oxide,
providing a powder of a third component such as at least one oxide of a metal such as for example yttrium and/or hafnium and/or iron,
mixing said zirconia powder with said alumina powder and said powder of said third component obtaining a mixture of powders,
placing and pressing said mixture of powders into a mold, obtaining a preformed product,
carrying out a first sintering of said preformed product at a temperature of 800°C or between 750°C and 850°C, obtaining a pre-sintered product,
carrying out a first step of polishing said pre-sintered product, obtaining a polished product,
carrying out a second sintering at a temperature between 1250°C and 1800°C obtaining said manufactured product, **characterized by** the fact that after said step of carrying out a second sintering, the following steps take place:
cooling said manufactured product, for example to a temperature of approximately 200°C or between 80°C and 200°C,
carrying out a second step of polishing said cooled manufactured product, obtaining a polished manufactured product,
washing said polished manufactured product, for example at a temperature of 100°C or between 80°C and 120°C and
drying, for example in an oven, for example a ventilated electric oven, for example at a temperature of up to 200°C, obtaining said finished manufactured product.

2. Method according to the claim 1, wherein said step of providing comprises providing a percentage, by weight of the total weight of said mixture of powders, between 55% and 85% or between 60% and 70% or 60% of zirconia, a percentage between 15 % and 40% or between 15% and 25% or between 20% and 30% or between 30% and 40% of alumina and between 0.1% and 15% of said third component.

3. Method according to the preceding claim, wherein said step of providing comprises providing said yttrium oxide in a percentage of less than 10% or less than 8% or less than about 6% and/or said hafnium oxide in a percentage less than 10% or less than 8% or less than approximately 5% and/or said iron oxide in a percentage less than 5% or less than 3% or less than 1% or less than 0.5% or between 0.6% and 1% or between 0.6% and 3% or between 0.6% and 5% or between 1% and 5%, wherein said percentages are percentages by weight of the total weight of said mixture.

4. Method according to the preceding claim, wherein said step of providing comprises providing 6% or less of yttrium oxide, 5% or less of hafnium oxide, 0.5% or less of iron oxide, 55-85% of zirconium oxide and/or 15-25% aluminium oxide, wherein said percentages are percentages by weight of the total weight of said mixture.

5. Method according to claim 3, wherein said step of providing comprises providing 6% or less yttrium oxide, 5% or less hafnium oxide, 0.6% or more iron oxide, 55-85% zirconium oxide and/or 15-25% aluminium oxide, wherein said percentages are percentages by weight of the total weight of said mixture.

6. Method according to any of the previous claims, wherein said pre-sintered product is subjected to at least one of the following subsequent processes: turning, milling, lasering, thus obtaining for said pre-sintered product a conformation substantially corresponding to that of said final manufactured product.

7. Method according to any of the previous claims, wherein said preformed product has a circular, polygonal, regular, irregular plan conformation and/or, considering its plan conformation, a diameter or size of approximately 100 mm and/or a thickness between 3 mm and 200 mm or up to 300 mm and above.

8. Method according to claim 1, wherein said first polishing step and/or said second polishing step takes place with a diamond and oil paste, for example with at least one shaped felt, preferably by hand, or mechanically or robotically.

9. Method according to any one of the preceding claims, wherein after said first polishing step a washing step takes place in a detergent solution, for example comprising ammonia-free soap, or by ultrasound, preferably at a temperature of about 200°C, and rinsing, for example with distilled water, said polished product obtaining a wet product and a step of drying said wet product using an infrared lamp or oven and/or in an electric oven with air, for example compressed air, obtaining a dried product.

10. Method according to any of the previous claims, comprising a step of pigmenting, for example with a pigment or colour in liquid or solution form, said preformed product or said wet product or said dried product, followed by said drying step or a further drying step.

11. Method according to any one of the preceding claims, wherein said step of carrying out a second sintering comprises sintering said polished and/or dried product for a time varying from 10 to 24 hours.

12. Method according to the previous claim, wherein after said drying step at least one application step of materials, such as precious metals such as gold, platinum, palladium, silver, or other materials such as titanium, carbon, metals in general, diamonds, natural and/or synthetic gems takes place, wherein said at least one application step occurs for example through welding or brazing on site or through gluing and/or mechanical interlocking, etc., obtaining a finished manufactured product.

13. Manufactured product for jewellery, watchmaking, goldsmithery or costume jewellery, wherein said manufactured product is a bracelet or a ring or a necklace or a pendant or an earring or a brooch or any other jewel or object usable in jewellery, watchmaking, goldsmithery or costume jewellery, achievable with the method according to any of the previous claims, wherein said manufactured product comprises zirconia or zirconium oxide, alumina or aluminium oxide, and a third component such as at least one oxide of a metal such as for example yttrium and/or hafnium and/or iron, **characterized in that** it comprises a compact, polished and washed external surface, for example shiny, mirror-like and/or diamond-like, and/or wherein said external surface is free of micro-cracks.

14. Product according to claim 13, wherein said manufactured product comprises a percentage, by weight of the total weight of said product, between 55% and 85% or between 60% and 70% or 60% of zirconia, a percentage between 15% and 40% or between 15% and 25% or between 20% and 30% or between 30% and 40% of alumina and between 0.1% and 15% of said third component.

15. Product according to claim 13 or 14, comprising said yttrium oxide in a percentage less than 10% or less than 8% or less than about 6% and/or said hafnium oxide in a percentage less than 10% or less than 8% or less than approximately 5% and/or said iron oxide in a percentage less than 5% or less than 3% or less than 1% or less than 0.5% or between 0.6% and 1% or 0.6% to 3% or 0.6% to 5% or 1% to 5%, or comprising 6% or less yttrium oxide, 5% or less hafnium oxide, 0 .5% or less of iron oxide, 55-85% of zirconium oxide and/or 15-25% of aluminium oxide, wherein said percentages are percentages by weight of the total weight of said product, or comprising 6% or less yttrium oxide, 5% or less hafnium oxide, 0,6% or more of iron oxide, 55-85% of zirconium oxide and/or 15-25% of aluminium oxide, wherein said percentages are percentages by weight of the total weight of said mixture.
